# EUROPÄISCHE PATENTSCHRIFT

(11) **EP 2 799 173 B1**
(45) Veröffentlichungstag und Bekanntmachung des Hinweises auf die Patenterteilung: **12.02.2020**
(21) Anmeldenummer: 13002391.4
(22) Anmeldetag: 04.05.2013
(51) Int. Cl.: B23C 5/22, B23C 5/10

(54) **MESSERKOPF UND SCHNEIDPLATTE**
KNIFE HEAD AND CUTTING PLATE
TÊTE DE MESURE ET PLAQUE DE COUPE

(43) Veröffentlichungstag der Anmeldung: 05.11.2014
(73) Patentinhaber: Ledermann GmbH & Co. KG, 72160 Horb a. N. (DE)
(72) Erfinder: Dressler, Martin Dr.Ing, 73614 Schorndorf (DE)
(74) Vertreter: Zurhorst, Stefan

(56) Entgegenhaltungen:
- WO-A1-2004/048022
- WO-A1-2008/073038
- WO-A1-2010/097797
- US-A1- 2010 008 735
- US-A1- 2011 058 907

## Beschreibung

Die Erfindung betrifft einen Messerkopf der im Oberbegriff des Anspruchs 1 angegebenen Gattung.

Ein Messerkopf umfasst einen rotierend antreibbaren Werkzeugträger, an dessen Umfang Schneidplatten zur materialabtragenden Bearbeitung von Werkstoffen durch Fräsen angeordnet sind. Solche Werkstoffe können beispielsweise Metall, Holz, holzartige Werkstoffe und Kunststoffe sein. Die Schneidplatten sind dabei jeweils auf Plattensitzen am Umfang und/oder auf der Planseite des Werkzeugträgers mittels Spannschrauben lösbar befestigt und können ausgetauscht werden, beispielsweise wenn die Schneidkante verschlissen ist. Sogenannte Wendeschneidplatten besitzen mehrere Schneidkanten. Verschleißt eine Schneidkante und ist stumpf, so wird die Schneidplatte einfach gedreht beziehungsweise gewendet.

Um eine möglichst gute Oberfläche bei der spanenden Bearbeitung mit Messerköpfen und einer Vielzahl von Schneidplatten zu erzielen, müssen die austauschbaren Schneidplatten in dem Bearbeitungswerkzeug möglichst genau positioniert werden. Bei einer ungenauen Positionierung der Schneidkanten können sich Riefen und andere Abzeichnungen der Schneiden in der erzeugten Oberfläche ergeben. Über die Spannschraube allein ist eine genaue Positionierung der Schneidplatte nicht möglich, da die Spannschraube für sich allein genommen der Schneidplatte keine definierte Drehwinkellage vorgibt. Darüber hinaus weist das Befestigungsgewinde der Spannschraube im Werkzeugträger ein Spiel auf, so dass sich auch unerwünschte laterale Positionsfreiheitsgrade in der Ebene der Plattenauflage ergeben würden. Jedem Plattensitz wird daher üblicherweise zusätzlich zur Spannschraube noch ein Positioniermittel zugeordnet, welches auf die jeweilige Schneidplatte positionierend wirkt.

Plattensitze für Schneidplatten, insbesondere Wendeschneidplatten, haben herkömmlich eine ebene Auflagefläche sowie eine oder mehrere winklig zur Auflagefläche geneigte Anschlagflächen, an der die Schneidplatte vor dem Anschrauben an den Werkzeugträger angelegt wird. Die Anschlagfläche ist dabei das vorgenannte Positioniermittel, wobei die Schneidplatte durch das Anlegen einer ihrer Span- bzw. Freiflächen positioniert wird, bevor sie am Werkzeugträger angeschraubt und verspannt wird.

Der Plattensitz mit Plattenauflage und Anschlagfläche wird bei der herkömmlichen Ausbildung einteilig am Werkzeugträger durch Fräsen, insbesondere durch eine Profilfräsung ausgebildet, wobei der gefräste Plattensitz durch seine Fertigungsgenauigkeit die notwendige und erzielbare Genauigkeit der Schneidenpositionierung bestimmen soll und muss. Die Fertigungspräzision kann jedoch nur mit hohem Aufwand während der Fertigung sichergestellt und geprüft werden, da Profile bzw. Flächen gebildet werden, die in drei Raumrichtungen gekippt sind und deshalb nur schwierig gemessen werden können.

Der Plattensitz des Werkzeugträgers und die Kontur der zum Einsatz kommenden Schneidplatten müssen in ihrer geometrischen Ausgestaltung sehr genau aufeinander abgestimmt werden. Der gefräste Plattensitz nach dem Stand der Technik gibt damit genau eine einbaufähige Schneidplattenform vor. Der wechselnde Einsatz von Schneidplatten mit unterschiedlicher Geometrie am gleichen Werkzeugträger ist praktisch nicht möglich, so dass bei einem Bedarf an abweichender Schneidplattengeometrie der gesamte Messerkopf ausgetauscht werden muss.

Im Betrieb von herkömmlichen Messerköpfen mit profilierten Plattensitzen unter Ausbildung einer Anschlagfläche zur Anlage der Schneidplatte kommt es oft zu einer Verschlechterung des Bearbeitungsergebnisses, was zum einen durch ein Verklemmen von Spänen zwischen den Schneidplatten verursacht wird. Hierbei spielen die schrägen Anschlagflächen des Werkzeugträgers eine nachteilige Rolle. Für deren Ausbildung müssen höckerartig hervorstehende Vorsprünge vorgesehen werden, die eine kontrollierte Spanabfuhr erschweren. Die verklemmten Späne können während des Betriebes zu übermäßigem Wärmeeintrag in das Werkzeug und das Werkstück führen, was das Werkzeug unbrauchbar machen oder Brandspuren am Werkstück verursachen kann. Zum anderen verschleißen die Schneidplatten während des Einsatzes. Werden verschlissene Schneidplatten auf dem Plattensitz gewendet oder gedreht, so ist nur eine ungenaue Positionierung der Schneidplatte möglich, insbesondere wenn nach ein- oder mehrmaligem Drehen der Schneidplatte eine abgenutzte oder beschädigte Spanfläche zur Positionierung herangezogen werden muss.

Schließlich ist bei herkömmlichen Messerköpfen noch problematisch, dass der Plattensitz mit Auflagefläche und Anschlagfläche insgesamt einteilig mit dem Grundkörper des Werkzeugträgers aus dem gleichen, im Vergleich zum Schneidplattenmaterial erheblich weicheren Material gebildet ist. Im Betrieb kommt es oft zu einer Beschädigung oder Zerstörung einzelner Schneidplatten. Dabei wird in der Regel auch der Plattensitz im Werkzeugträger des Messerkopfs durch die wesentlich härtere Schneidplatte beschädigt bzw. verformt. Wird der Plattensitz in seinem Profil verformt und geändert, so kann eine neu eingesetzte Schneidplatte nicht mehr präzise an der Profilfräsung des Plattensitzes positioniert werden. Eine Nachbearbeitung eines beschädigten Plattensitzes ist praktisch nicht möglich, so dass ein solcher Werkzeugträger als Schrott anzusehen ist.

Aus der US 2011/0058907 A1 ist ein Messerkopf mit Schneidplatten bekannt, wobei jede einzelne Schneidplatte mittels je einer Senkkopfschraube befestigt ist. Außerdem sind Stifte vorgesehen, die in entsprechenden Aufnahmebohrungen axial nachgiebig gegen die Vorspannkraft von Schraubendruckfedern gelagert sind. Die einzelnen Schneidplatten werden mittels der zentralen Befestigungsschraube an Anschlagflächen positioniert und mittels der Schräge des Schrauben-Senkkopfes gegen diese gedrückt. Unter Einwirkung dieses seitlich wirkenden Positionierdruckes gibt der nachgiebig gelagerte Stift nach. In dieser nachgegebenen Position wird er fixiert und soll auf diese Weise bei der Aufnahme der sehr hohen Fliehkräfte helfen. Ein ähnlicher Aufbau ist in US 2010/0008735 A1 offenbart.

Beim Schneidwerkzeug gemäß WO 2004/048022 A1 sind insgesamt mindestens zwei Positionierstifte vorgesehen, die in je eine Positionierausnehmung eingreifen. Die Positionierausnehmungen haben eine rhombische Querschnittsform, so dass insgesamt vier Anlagepunkte entstehen. Damit findet eine Positionierung und Verspannung gegen insgesamt vier Punkte an insgesamt zwei Positionierelementen statt.

Aus der WO 2008/073038 A1 ist ein Werkzeug bekannt, bei welchem die Schneidplatten mittels einer elastischen Federhülse gegen eine Fläche ihres Plattensitzes gespannt werden. Beim Werkzeug gemäß der WO 2010/097797 A1 umfasst der jeweilige Plattensitz neben einer Grundfläche auch noch senkrecht zur Grundfläche stehende Anschlagflächen für die jeweilige Schneidplatte.

Der vorliegenden Erfindung liegt die Aufgabe zugrunde, einen Messerkopf mit solchen Schneidplatten zu schaffen, dass dauerhafter eine genaue Positionierung der Schneidplatten am Messerkopf gewährleistet ist und dadurch eine verbesserte Leistung und Lebensdauer des Messerkopfs erreicht werden kann.

Diese Aufgabe wird durch einen Messerkopf mit den Merkmalen des Anspruchs 1 gelöst.

Die erfindungsgemäße Schneidplatte weist mindestens eine Positionierausnehmung auf, welche zur Aufnahme eines am Plattensitz des Messerkopfs angeordneten Positionierelementes vorgesehen und mit einer in der Ebene der Anlagefläche positionierend und verspannend wirkenden Passfläche ausgebildet ist. Die Positionierausnehmung reicht von der Oberfläche des dreidimensionalen Körpers der Schneidplatte in dessen Inneres, wobei die Wand der Positionierausnehmung einen materialfreien Raum begrenzt. Die Wand der Positionierausnehmung bildet dabei die Passfläche aus, mit der das Positioniermittel des Plattensitzes zusammenwirkt. Das erfindungsgemäße Positioniermittel am Plattensitz umfasst eine Passbohrung und ein in die Passbohrung einsetzbares und aus der Auflagefläche hervorstehendes längliches Positionierelement. Die Passbohrung kann mit geringem Fertigungsaufwand sehr genau in den Plattensitz des Werkzeugträgers für den Messerkopf eingebracht werden, wobei das Positionierelement spielfrei in die Passbohrung eingesetzt werden kann. Unabhängig von dem Spiel der Bohrung für die Spannschraube kann somit die Schneidplatte genau an dem Positionierelement ausgerichtet werden. Die Lage der Passbohrung im Plattensitz ist mit der Positionierausnehmung der Schneidplatte derart abgestimmt, dass die Passfläche in der Positionierausnehmung mit dem Positionierkopf des länglichen Positionierelementes nicht nur positionierend, sondern auch in der Ebene der Anlagefläche verspannend zusammenwirkt. Beim Festziehen der Spannschraube entsteht eine laterale, quer zur Längsachse der Spannschraube wirkende Verspannung, die das immanent vorhandene Gewindespiel der Spannschraube wegdrückt. Im Ergebnis wird die Schneidplatte in allen lateralen Bewegungsfreiheitsgraden der Anlagefläche exakt positioniert und fixiert. Darüber hinaus wird die Schneidplatte auch in ihrem rotatorischen Bewegungsfreiheitsgrad um die Schraubenachse exakt positioniert und fixiert.

Durch die erfindungsgemäße Ausbildung der Schneidplatte mit einer Positionierausnehmung und die Ausbildung des Messerkopfs mit einer Passbohrung im Plattensitz und einem aus dem Plattensitz hervorstehenden länglichen Positionierelement ist eine gegenüber herkömmlichen Messerköpfen erheblich weniger aufwändige Herstellung des Plattensitzes möglich. Der Plattensitz ist allein durch die Auflagefläche, also ohne angeformte Anschlagfläche gebildet, wobei die Auflagefläche als ebene Fläche ausgebildet wird. Eine aufwändig herzustellende Profilierung des Plattensitzes wie bei herkömmlichen Plattensitzen ist nicht mehr erforderlich. Die Herstellung ist durch einfaches ebenes Überfräsen und ggf. durch ebenes Überschleifen möglich. Der Plattensitz für die erfindungsgemäße Anordnung und Ausbildung kann darüber hinaus mit einfachen Messmitteln während der Fertigung geprüft werden. Der erfindungsgemäße ebene Plattensitz verhindert zudem, dass Späne, welche zwischen die Schneidplatten geraten, nicht verklemmt werden, sondern durch den Zwischenraum der ebenen Plattensitzkontur ausgeworfen werden können.

Die gute Zugänglichkeit des durch die Erfindung ermöglichten einfachen Plattensitzes ermöglicht ferner eine schnelle Beseitigung von gegebenenfalls auftretenden Kratzern am Plattensitz. Der ebene Plattensitz kann nach leicht möglicher Entfernung der Positionierelemente auf einfache Weise beispielsweise durch Abziehen mit einem Abziehstein wiederhergestellt werden, sodass eine Schneidplatte wieder vollflächig auf dem ebenen Plattensitz aufliegen kann. Die Fläche des Plattensitzes stellt genügenden Freiraum für den Einsatz eines Abziehsteins zur Verfügung, um den ebenen Plattensitz zu bearbeiten.

Ein weiterer Vorteil der erfindungsgemäßen Ausbildung des Messerkopfs mit einem aus dem Plattensitz hervorstehenden Positionierelement ist darin zu sehen, dass eine Positionierung der Schneidplatte nicht mehr wie bei herkömmlichen Messerköpfen über eine Anschlagfläche aus dem gleichen Material wie das des Werkzeuggrundkörpers erfolgt. Vielmehr kann für den Anschlag der Schneidplatte ein Positionierelement aus verschleißfesterem bzw. härterem Material eingesetzt werden, welches nicht so leicht beschädigt wird.

Die erfindungsgemäße Positionierung über eine eigens geschaffene Positionierausnehmung mit darin ausgebildeter Passfläche ist vor allem bei einer vorteilhaften Ausführungsform der Schneidplatte als Wendeschneidplatte mit mehreren wahlweise zum Einsatz kommenden Schneidkanten von Bedeutung, wobei pro Schneidkante je eine Positionierausnehmung vorgesehen ist. Es stehen damit Schneidplatten zur Verfügung, deren verschlissene Schneidenflächen (Frei- bzw. Spanflächen) beim Drehen der Wendeschneidplatte nicht mehr für eine Positionierung weiterer Schneidkanten derselben Schneidplatte herangezogen werden müssen. Die Positionierung der erfindungsgemäßen Schneidplatte erfolgt vielmehr völlig unabhängig von dem Verschleißzustand der Schneidplatte. Außerdem ist die positionierend wirkende Passfläche in der Positionierausnehmung der erfindungsgemäßen Schneidplatte vor jeglicher Abnutzung geschützt.

Die Passbohrung zur Aufnahme des Positionierelements kann mit gängigen Fertigungstechnologien auf Werkzeugmaschinen sehr exakt positioniert werden. Dadurch ist der Aufwand zur Herstellung des Werkzeugträgers zusätzlich reduziert. In einer vorteilhaften Ausführungsform der Erfindung wird die Passbohrung senkrecht zur Auflagefläche des Plattensitzes ausgebildet, wodurch ein Verlaufen des Bohrwerkzeugs ausgeschlossen wird und die Passbohrung passgenau angeordnet werden kann.

Eine besonders einfache Montage der Schneidplatte ist gewährleistet, wenn die Positionierausnehmung im Bereich der Anlagefläche der Schneidplatte ausgebildet ist. Vorteilhaft ist die Tiefe der Positionierausnehmung in Dickenrichtung der Schneidplatte ausgehend von der Anlagefläche geringer als die Dicke der Schneidplatte. Es entsteht eine in Dickenrichtung nach außen geschlossene Tasche. Dabei erfährt die Schneidkante durch die Positionierausnehmung keine Unterbrechung. Die Schneidplatte wird bei der Montage auf das aus dem Plattensitz ragende Positioniermittel aufgesetzt und beim Verspannen exakt ausgerichtet. Ferner liegt das Positioniermittel im Betriebszustand der Schneidplatte innerhalb der genannten Tasche zwischen der ungestörten äußeren Deckfläche der Schneidplatte und dem Plattensitz geschützt.

In einer vorteilhaften Ausführungsform ist die Passfläche durch mindestens zwei winklig zueinander angeordnete Umfangswandabschnitte der Positionierausnehmung gebildet. Dadurch ist gewährleistet, dass die Passfläche die Positionierausnehmung in mehreren Richtungen der Anlagenebene begrenzt und somit eine Ausrichtung der Schneidplatte in allen drei Bewegungsfreiheitsgraden der Anlage- bzw. Auflagefläche, also in zwei lateralen und einem rotatorischen Freiheitsgrad erfolgt.

Vorteilhaft ist die Positionierausnehmung auf einer bezüglich der Durchgangsbohrung der Schneidplatte jenseits der Schneidkante liegenden Seite der Schneidplatte angeordnet. Bezogen auf die Drehrichtung des Messerkopfes liegen damit die Positionierausnehmung und das darin eingreifende Positioniermittel rückwärtig der jeweils aktiven Schneidkante und sind somit vor den direkten Betriebseinflüssen der Zerspanung geschützt.

In einer bevorzugten Ausführungsform der Erfindung verläuft die Passfläche der Positionierausnehmung in einem Querschnitt der Schneidplatte gemessen zumindest abschnittsweise schrägwinkelig zur Anlagefläche bzw. schrägwinklig zur Achse der Durchgangsbohrung der Schneidplatte. Analoges gilt für eine Verspann- und Positionierfläche des Positionierelements: Alternativ oder zusätzlich zur Passfläche der Schneidplatte verläuft die Verspann- und Positionierfläche des Positionierelementes in einem Längsschnitt gemessen zumindest abschnittsweise schrägwinklig zur Auflagefläche des Werkzeugträgers. Insbesondere sind die genannten Verläufe geradlinig, konvex oder konkav gekrümmt. Schrägwinklig bedeutet hier, dass der Winkel von 0° und auch von 90° signifikant abweicht. Beim Montieren der Schneidplatte an dem Werkzeugträger des Messerkopfs dringt das Positionierelement des Plattensitzes in die Positionierausnehmung ein und gerät mit seiner Verspann- und Positionierfläche in Kontakt mit der Passfläche. Durch die schrägwinklige Anordnung von zumindest einer der beiden genannten Flächen, und insbesondere von beiden genannten Flächen entsteht beim Festziehen der Spannschraube eine seitliche Abgleitbewegung, die die gewünschte und oben beschriebene laterale Verspannung erzeugt.

Eine einfache Fertigung der Schneidplatte bei möglichst hoher Festigkeit der Schneidplatte ist gegeben, wenn die Positionierausnehmungen jeweils einer Ecke der Schneidplatten zugeordnet sind. Auf die Weise können die Positionierausnehmungen mit einem im Vergleich zu anderen Lagen großen Querschnitt ausgebildet werden. Auf diese Weise ist eine optimale Positionierbarkeit einer Schneidplatte mit mehreren Schneidkanten und Positionierausnehmungen gegeben.

In einer vorteilhaften Ausführungsform der Erfindung ist das Positionierelement ein Zylinderstift, der in eine zylindrisch ausgeführte Passbohrung im Plattensitz des Werkzeugträgers eingesetzt ist. Der Zylinderstift ist spielfrei in die Passbohrung eingesetzt und damit optimal positioniert, sodass bei jedem Drehen oder Wechseln der entsprechenden Schneidplatte eine Ausrichtung an dem Zylinderstift erfolgen kann. Der aus dem Plattensitz hervorstehende Positionierkopf des Zylinderstiftes wirkt bei der Montage der Schneidplatte mit der Passfläche in der Positionierausnehmung zusammen und sorgt sowohl für eine Positionierung als auch für eine ausreichende laterale Verspannung beim Anziehen der Spannschraube. Eine erste Sicherung des Zylinderstiftes gegen Herausfallen bzw. Verlieren erfolgt durch die aufgesetzte Schneidplatte. Der Zylinderstift wird zweckmäßig durch eine zusätzliche zweite Sicherung, beispielsweise durch Einkleben, gesichert. Der Zylinderstift ist vorzugsweise ein Passstift.

In einer bevorzugten Alternative ist das Positionierelement eine Passschraube mit einem zylindrischen Passabschnitt, wobei die zugehörige Passbohrung eine Gewindebohrung mit einer zylindrischen Passfläche ist. In einer weiteren bevorzugten Alternative ist das Positionierelement eine Kegelschraube mit einem Kegelsitz, wobei die zugehörige Passbohrung eine Gewindebohrung mit einer Kegelsenkung ist. Im Falle der zylindrischen Passfläche wird die Positioniergenauigkeit durch geeignete Maßtoleranzen herbeigeführt. Im Falle des Kegelsitzes führt das Zusammenspiel von Kegelsitz und Kegelsenkung beim Einschrauben selbsttätig eine lagegenaue und spielfreie Positionierung herbei. In beiden Fällen gilt: Ist die Anpressfläche bzw. der Positionierkopf der Passschraube bzw. der Kegelschraube beschädigt oder abgenutzt, kann die jeweilige Schraube mit einfachen Mitteln ausgetauscht werden. Mit einer neuen Pass- oder Kegelschraube ist der Messerkopf unmittelbar mit der ursprünglichen Genauigkeit der Positionierung wiederhergestellt. Der Messerkopf kann dadurch länger im einsatzfähigen Zustand gehalten werden. Die die Genauigkeit bestimmende Oberfläche zwischen der Pass- oder Kegelschraube und dem Werkzeugträger ist unter dem jeweiligen Schraubenkopf vor Beschädigung geschützt.

Mit einer einzigen Passbohrung können Positionierelemente für unterschiedliche Schneidplatten vorgesehen werden, indem Passschrauben beispielsweise mit unterschiedlich profilierten Schraubenköpfen verwendet werden.

In einer weiteren vorteilhaften Ausführungsform weisen die Plattensitze mehrere Passbohrungen auf. Dadurch können die erfindungsgemäßen Schneidplatten mit Positionierausnehmungen an der Unterseite in unterschiedlichen Achswinkeln oder für unterschiedliche Drehrichtungen des Messerkopfs angeordnet werden. Je nachdem, welche Drehrichtung des Messerkopfs gewünscht ist, werden die Positionierelemente derart in die jeweils vorgesehene Passbohrung eingesetzt, dass die Schneidplatten im entsprechenden Achswinkel angeordnet werden oder der Messerkopf die entsprechende Drehrichtung erhält. Natürlich können unterschiedliche Passbohrungen auch einfach nur zur alternativen Aufnahme von verschiedenen Positionierelementen für unterschiedliche Schneidplatten vorgesehen sein, wobei eine Veränderung von Achswinkel und/oder Drehrichtung zwar möglich ist, aber nicht vorgesehen sein muss.

Vorteilhaft weisen die mehreren Passbohrungen eines Plattensitzes unterschiedliche Geometrien und insbesondere unterschiedliche Durchmesser auf, wodurch sichergestellt ist, dass in jede Passbohrung nur solche Positionierelemente eingesetzt werden können, deren Geometrien der jeweils zugeordneten Schneidplatte und der darin ausgebildeten Passfläche entsprechen. Verwechslungen und Fehlmontagen sind hierdurch zuverlässig vermieden.

Beim Einsatz sowohl von Zylinderstiften als auch von Passschrauben als Positionierelemente wird die Kontur der Passfläche in der Positionierausnehmung der Schneidplatte mit der Kontur des Kopfes des eingesetzten Positionierelements abgestimmt. In dieser vorteilhaften Ausführungsform der Erfindung weist der Positionierkopf des Positionierelementes zumindest abschnittsweise eine geometrisch ähnliche Kontur auf wie die Passfläche der Positionierausnehmung. Hierdurch ist zumindest abschnittsweise eine flächige Anlage mit geringer Flächenpressung möglich. Die Formgebung der Positionierausnehmung ist mit bekannten Herstellungsverfahren wie Schleifen, Sintern, Pressen oder Spritzgießen möglich.

In einer vorteilhaften Ausführungsform der Erfindung ist die Tiefe der Positionierausnehmung in der Schneidplatte geringer als die vorgesehene Einschraubtiefe der Spannschraube, wodurch ein Drehen der Schneidplatte möglich ist, ohne die Schneidplatte komplett vom Plattensitz zu demontieren. Vorteilhaft werden daher Passschrauben mit flachen Kopfprofilen eingesetzt. Zum Drehen einer Schneidplatte wird die Spannschraube nur derart weit gelöst, dass die Schneidplatte über das Positionierelement, beispielsweise den Schraubenkopf der Passschraube hinweg, gedreht werden kann. Dadurch wird insbesondere ein Drehen der Schneidplatten vereinfacht und gleichzeitig einem Verlieren der Schneidplatte entgegengewirkt.

In einer vorteilhaften Ausführungsform der erfindungsgemäßen Schneidplatte als Wendeschneidplatte mit mehreren wahlweise zum Einsatz kommenden Schneidkanten ist pro Schneidkante je eine Positionierausnehmung vorgesehen, wobei die Positionierausnehmungen in Drehwinkelabständen bezüglich der Durchgangsbohrung entsprechend der Drehwinkelabstände der Schneidkanten angeordnet sind. Alle Positionierausnehmungen einer Schneidplatte liegen dabei in der jeweils gleichen Relativlage zu den ihnen jeweils zugeordneten Schneidkanten. Die Wendeschneidplatte kann hierdurch in jeder möglichen Einbaulage an dem Positionierelement positioniert und verspannt werden, ohne dass das Positionierelement ausgetauscht oder in seiner Lage verändert werden muss. So wird stets eine genau positionierte Schneidkante in Einsatz gebracht.

Ausführungsbeispiele der Erfindung sind nachfolgend anhand der Zeichnung näher beschrieben. Es zeigen:
- Fig. 1: eine perspektivische Ansicht eines erfindungsgemäßen Messerkopfs;
- Fig. 2: eine perspektivische Detailansicht von Schneidplatten am Umfang eines Messerkopfs nach dem Stand der Technik mit einteilig profilgefrästen Plattensitzen;
- Fig. 3: eine perspektivische Detailansicht von Schneidplatten am Umfang des erfindungsgemäßen Messerkopfs nach Fig. 1 mit ebenen Plattensitzen ohne einteilig ausgebildeten Anschlagflächen;
- Fig. 4: eine perspektivische Oberansicht eines Ausführungsbeispiels einer erfindungsgemäßen Schneidplatte nach Fig. 3 mit je einer Befestigungs- und Passschraube;
- Fig. 5: eine perspektivische Unteransicht der Schneidplatte nach Fig. 3 mit weiteren geometrischen Einzelheiten;
- Fig. 6: eine perspektivische Ansicht eines erfindungsgemäßen Plattensitzes am Werkzeugträger des Messerkopfs nach den Fig. 1 und 3 mit mehreren Passbohrungen;
- Fig. 7: eine geschnittene Ansicht einer Schneidplatte nach den Fig. 4, 5 in Einbaulage und im Zusammenspiel mit einem Zylinderstift an Stelle der Passschraube;
- Fig. 8: eine Variante der Anordnung nach Fig. 7 mit einer Kegelschraube an Stelle des Zylinderstiftes;
- Fig. 9: ein Ausführungsbeispiel des erfindungsgemäßen Positionierelements mit konischer Anschlagfläche;
- Fig. 10: eine Variante der Ausführungsform nach Fig. 9 mit im Querschnitt konkav gekrümmter Anschlagfläche, und
- Fig. 11: eine weitere Variante der Ausführungsform nach den Fig. 9, 10 mit ebenen Anschlagflächen.

In den Zeichnungsfiguren sind für gleiche Bauteile die jeweils gleichen Bezugszeichen verwendet.

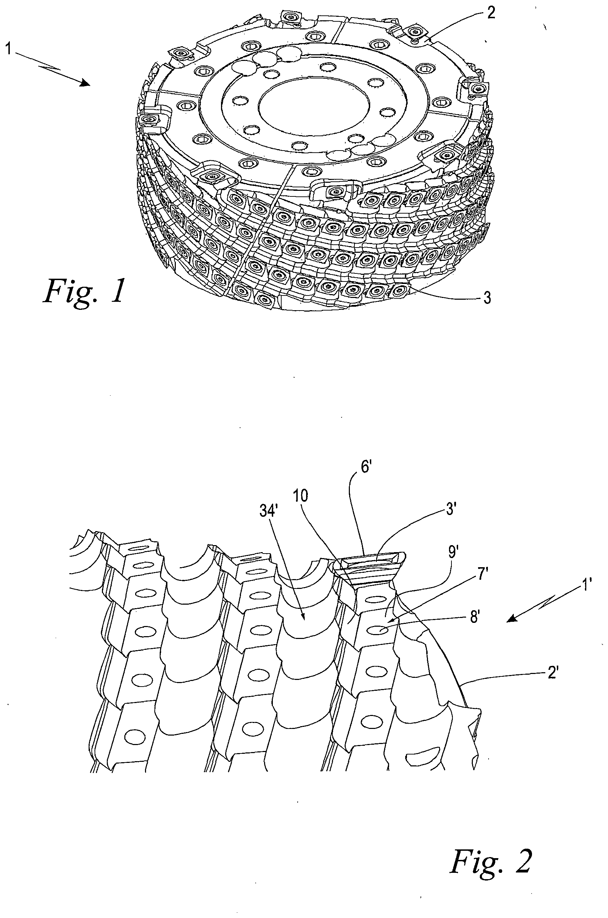

Fig. 1 zeigt beispielhaft einen Messerkopf 1 mit einem rotierend antreibbaren Werkzeugträger 2, an dessen Umfang eine Vielzahl von austauschbaren Schneidplatten 3 erfindungsgemäß befestigt ist. Auch an der Stirnfläche des Werkzeugträgers 2 sind einzelne Schneidplatten 6 erfindungsgemäß befestigt. Abweichend vom gezeigten Ausführungsbeispiel kann es aber auch zweckmäßig sein, nur am Umfang oder nur an der Stirnfläche Schneidplatten 6 vorzusehen. Darüber hinaus können abweichend von der gezeigten Zylinderform beliebige andere Geometrien des Werkzeugträgers 2 beispielsweise in konischer Form im Rahmen der Erfindung gewählt werden. Einzelheiten der erfindungsgemäßen Schneidplattenausgestaltung und -befestigung sind weiter unten näher beschrieben.

In Fig. 2 ist ein Ausschnitt der Mantelfläche eines Messerkopfs 1' nach dem Stand der Technik dargestellt. Jede Schneidplatte 3', von denen hier zu besseren Übersicht nur eine montierte Schneidplatte 3' dargestellt ist, ist dabei mittels je einer Spannschraube mit dem Werkzeugträger 2' verschraubt. Hierzu ist in jeder der Schneidplatten 3' eine Durchgangsbohrung zur Aufnahme der Spannschraube ausgebildet. Die Schneidplatten 3' sind als Wendeschneidplatten ausgebildet und weisen jeweils mehrere Schneidkanten 6' auf, welche im Betrieb des Messerkopfs in Eingriff mit dem Werkstück gebracht werden. Am Umfang des Werkzeugträgers 2' ist für jede Schneidplatte 3' je ein Plattensitz 7' ausgebildet, welcher jeweils eine Gewindebohrung 8' zur Aufnahme der jeweiligen Spannschraube aufweist.

Bei der herkömmlichen Bauart sind die Plattensitze 7' profiliert ausgebildet, wobei im Werkzeugträger 2' neben einer ebenen Auflagefläche 9' mit der Gewindebohrung 8' auch eine Anschlagfläche 10 zur gemeinsamen Bildung des jeweiligen Plattensitzes 7' aus dem Grundkörper des Werkzeugträger 2' einteilig ausgefräst ist. Die Anschlagfläche 10 ist an einem Vorsprung ausgebildet, der über die Ebene der Auflagefläche 9' hervorsteht, und der außerdem einen benachbarten Spanraum 34' begrenzt. An der Anschlagfläche 10 wird die jeweilige Schneidplatte 3' bei der Montage angelegt und in die vorgesehene Arbeitslage positioniert. Die Anschlagfläche 10 bildet somit bei der herkömmlichen Bauart ein einteilig mit der Auflagefläche 9' am Werkzeugträger 2' ausgebildetes Positioniermittel, wobei die Anschlagfläche 10 und die Auflagefläche 9' entsprechend sorgfältig gefräst und hinsichtlich ihrer Genauigkeit auch geprüft sein müssen.

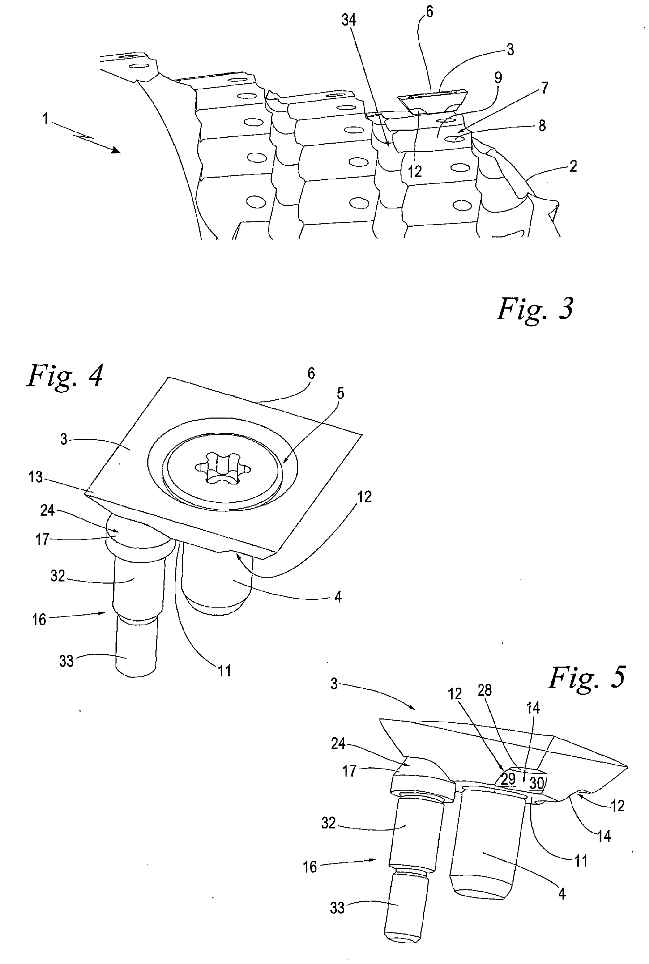

Im direkten Vergleich zum Stand der Technik nach Fig. 2 ist in Fig. 3 eine perspektivische Detailansicht von Schneidplatten 3 am Umfang des erfindungemäßen Messerkopfs 1 bzw. dessen Werkzeugträger 2 nach Fig. 1 dargestellt. Der Messerkopf 1 ist mit erfindungsgemäßen Schneidplatten 3 ausgestattet und weist außerdem erfindungsgemäß ausgebildete Plattensitze 7 auf. Auch hier ist zur besseren Übersicht nur eine einzelne montierte Schneidplatte 3 dargestellt. Jede dieser Schneidplatten 3 ist mit je einer Spannschraube 4 (Fig. 4, 5) auf je einem ebenen Plattensitz 7 befestigt. Der jeweilige erfindungsgemäße Plattensitz 7 ist dabei allein durch die Auflagefläche 9 für die zugeordnete Schneidplatte 3 gebildet, wobei die Auflagefläche 9 eben ausgebildet ist, und wobei der Plattensitz 7 darüber hinaus, abweichend vom in Fig. 2 dargestellten Stand der Technik, keine integrierte, einteilig mit dem Werkzeugträger 2 ausgebildete Anschlagfläche 10 aufweist. Es ist gut erkennbar, dass die ebene Auflagefläche 9 direkt und ohne Unterbrechung bis an den benachbarten Spanraum 34 heranreicht.

Auf der jeweiligen Auflagefläche 9 liegt die jeweilige Schneidplatte 3 mit ihrer in Fig. 5 dargestellten Anlagefläche 11 auf. Auf der Unterseite der Schneidplatte 3, welche die Anlagefläche 11 bildet, weist jede Schneidplatte 3 mindestens eine, hier pro Schneidkante 6 je eine Positionierausnehmung 12 auf. Bei hier im Wesentlichen viereckiger Ausgestaltung mit insgesamt vier Schneidkanten 6 einer jeden Schneidplatte 3 sind also ebenfalls vier Positionierausnehmungen 12 vorgesehen. Die Positionierausnehmungen 12 sind dabei den Ecken 13 der Schneidplatte 3 zugeordnet. Sie können aber auch beispielsweise im Bereich einer Kantenmitte der Schneidplatte 3 angeordnet sein. Es können auch drei- oder mehreckige Schneidplatten 3 oder Schneidplatten 3 mit einer abweichenden Anzahl von Schneidkanten 6 vorgesehen sein, wobei in solchen Fällen vorteilhaft eine Anzahl von Positionierausnehmungen 12 an jeder Schneidplatte 3 vorgesehen ist, die gleich der Anzahl der Schneidkanten 6 ist.

Die Positionierausnehmung 12 ist zur Aufnahme eines am Plattensitz 7 angeordneten, hier in Fig. 3 aber zur besseren Übersicht nicht dargestellten Positionierelementes vorgesehen. Einzelheiten zu den genannten Positionierelementen und deren Wechselspiel mit den Positionierausnehmungen 12 sind in den Fig. 4, 5 und 7 dargestellt: Die Positionierausnehmung 12 weist eine in der Ebene der Anlagefläche 11 positionierend und verspannend wirkende und entsprechend ausgebildete Passfläche 14 auf. Die Umfangswand der Positionierausnehmung 12 bildet dabei die Passfläche 14, mit dem das erfindungsgemäße, weiter unten näher beschriebene Positioniermittel am Plattensitz 7 zusammenwirkt. Die Positionierausnehmung 12 ist im Bereich der Anlagefläche 11 ausgebildet, also nicht auf der gegenüberliegenden Oberseite der Schneidplatte 3 mit den Schneidkanten 6. Dabei ist die in Dickenrichtung der Schneidplatte 6 gemessene Tiefe der Positionierausnehmung 12 geringer als die Dicke der Schneidplatte 3. Mit anderen Worten reicht die Positionierausnehmung 12 ausgehend von der Anlagefläche 11 nach oben nicht bis zur Oberseite der Schneidplatte 3, sondern weist nach oben bzw. nach außen hin eine Deckfläche 28 auf. Die Passfläche 14 kann eben ausgebildet sein. Im gezeigten bevorzugten Ausführungsbeispiel ist die Passfläche 14 durch mindestens zwei winklig zueinander angeordnete Umfangswandabschnitte 29, 30 der Positionierausnehmung 12 gebildet, die hier bogenförmig bzw. in Form eines Kegelstumpf- oder Konusabschnittes ineinander übergehen. Hierdurch entsteht eine zumindest teilweise geschlossene Kavität, wodurch die Positionierausnehmung 12 und der darin aufgenommene, weiter unten näher beschriebene Positionierkopf 17 des Positioniermittels geschützt ist. Des Weiteren wird die darüber liegende Schneidkante 6 nicht durch die Positionierausnehmung 12 unterbrochen.

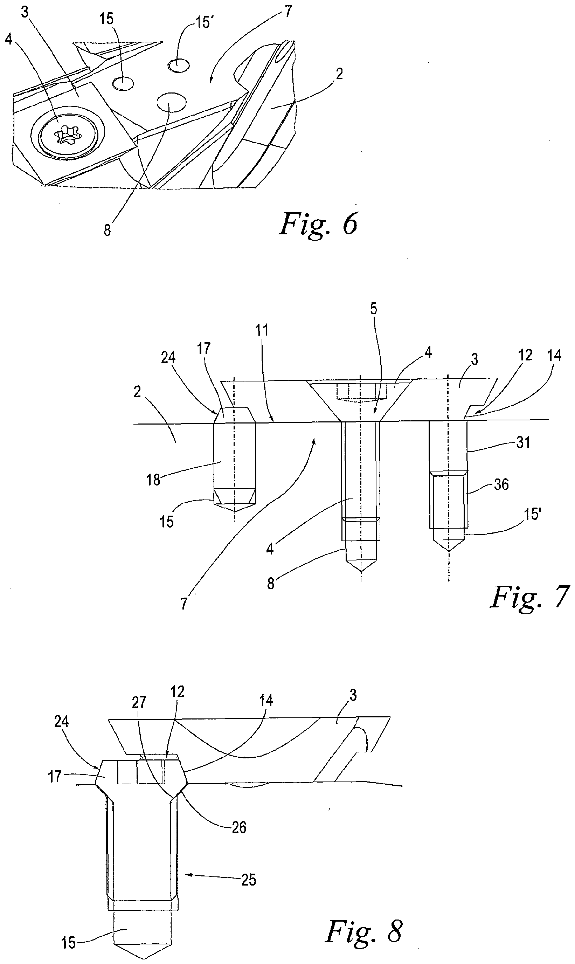

Das vorgenannte erfindungsgemäße Positionierelement ist in den Fig. 4, 5, 7 und 8 dargestellt und allgemein länglich ausgebildet. Bevorzugte Bauformen des Positionierelementes sind wahlweise eine Passschraube 16 (Fig. 4, 5), ein Zylinderstift 18 (Fig. 7) oder eine Kegelschraube 25 (Fig. 8). Es können aber auch andere Ausführungsformen zweckmäßig sein. Das Positionierelement ist spielfrei in eine Passbohrung 15 (Fig. 6, 7) im Plattensitz 7, d.h. in die Auflagefläche 9 derart eingesetzt, dass es aus dem Plattensitz 7 bzw. der Auflagefläche 9 hervorsteht. Das Positionierelement und die Passbohrung 15 sind Teile des Positioniermittels, welches mit der Positionierausnehmung 12 an der Schneidplatte 3 bei der Montage der Schneidplatte 3 zusammenwirkt, die Schneidplatte 3 beim Verschrauben lateral verspannt und die Schneidkante 6 in der Folge spielfrei und lagegenau ausrichtet. Die Lage der Passbohrung 15 im Plattensitz 7 ist mit der Positionierausnehmung 12 abgestimmt. Die Positionierausnehmung 12 und insbesondere die in der Positionierausnehmung 12 ausgebildete Passfläche 14 ist dabei in einer derartigen Lage zur Schneidkante 6 in der Schneidplatte 3 gefertigt, dass in Einbaulage der Schneidplatte 3 die Schneidkante 6 in einer definierten Lage relativ zu dem Positioniermittel ausgerichtet ist.

Das Positioniermittel ist im Ausführungsbeispiel gem. Fig. 4 und Fig. 5 eine Passschraube 16, deren Schraubenkopf als Positionierkopf 17 mit einer umlaufenden, kegelförmigen Verspann- und Positionierfläche 24 ausgebildet ist. Am freien Ende der Passschraube 16 ist ein Gewindeabschnitt 33 vorgesehen. Zwischen dem Gewindeabschnitt 33 und dem Positionierkopf 17 befindet sich ein zylindrischer Passabschnitt 32. Zugehörige Passbohrungen 15, 15' sind in den Fig. 6 und 7 dargestellt. Sie sind jeweils als Gewindebohrung mit einem Innengewinde 35 und einer zylindrischen Passfläche 31 ausgeführt, wie dies in der Schnittdarstellung der Passbohrung 15' nach Fig. 7 erkennbar ist. Die Passschraube 16 greift mittels ihres zylindrischen Passabschnittes 32 in die zylindrische Passfläche 31 der Passbohrung 15 ein und wird dadurch lagegenau positioniert.

Die Passschraube 16 greift mit ihrem Positionierkopf 17 entsprechend der Darstellung nach den Fig. 4, 5 in die Positionierausnehmung 12 ein. Die Kontur der Positionierausnehmung 12 und insbesondere deren Passfläche 14 ist korrespondierend mit der Kontur der Verspann- und Positionierfläche 24 des Positionierkopfes 17 ausgebildet. Die Passfläche 14 in der Positionierausnehmung 12 verläuft im Querschnitt der Schneidplatte 3 (Fig. 7, 8) gemessen zumindest abschnittsweise schrägwinkelig, hier aufgrund ihrer abschnittsweisen Kegelstumpf- oder Konusform geradlinig schrägwinklig zur Anlagefläche 11 und zur Längsachse der Durchgangsbohrung 5 der Schneidplatte 3. Im genannten Querschnitt kann der Verlauf aber auch zumindest abschnittsweise konvex oder konkav gekrümmt sein. Sinngemäß das Gleiche gilt auch für die Verspann- und Positionierfläche 24 des Positionierkopfes 17: Sie verläuft im Längsschnitt des Positionierelementes (Fig. 7, 8) gemessen zumindest abschnittsweise schrägwinklig, hier aufgrund ihrer Kegelstumpf- oder Konusform geradlinig schrägwinklig zur Auflagefläche 9. Die Verspann- und Positionierfläche 24 kann im genannten Längsschnitt aber auch zumindest abschnittsweise konvex oder konkav gekrümmt verlaufen. Die Kontur der Passfläche 14 entspricht in jedem Falle bevorzugt der Kontur des Positionierkopfes 17. Die Passfläche 14 der Positionierausnehmung 12 weist dadurch zumindest abschnittsweise eine zur Kontur der Verspann- und Positionierfläche 24 geometrisch ähnliche Kontur auf.

Die Schneidplatte 3 wird beim Aufsetzen auf die Passschraube 16 durch den Eingriff des Positionierkopfes 24 in die Positionierausnehmung 12 positioniert. Beim Anziehen der Spannschraube 4 kommen Teilflächen der Verspann- und Positionierfläche 24 und der Passfläche 14 miteinander in Berührung. Durch die oben beschriebene geometrische Ähnlichkeit kommt es zu einer nur geringen Flächenpressung. Da zumindest eine von den genannten Flächen, hier bevorzugt beide Flächen schrägwinklig, also signifikant von 0° und von 90° zur jeweiligen Bezugsrichtung abweichend angeordnet sind, führt das axiale Festziehen der Spannschraube 4 zu einer schrägwinkligen Abgleitbewegung, was wiederum zu einer in der Ebene der Anlagefläche 11 lateral wirkenden Verspannung führt. Diese laterale Verspannung überwindet das Spiel der Spannschraube 4 in ihrer zugeordneten Gewindebohrung 8. Da die Umfangswandabschnitte 29, 30 der Passfläche zudem winklig zueinander angeordnet sind, wirkt die Verspannung in zwei unterschiedlichen lateralen Richtungen der Ebene der Anlagefläche 11, was einerseits zu einer lagegenauen lateralen Positionierung und andererseits zu einer ebenso genauen rotatorischen Positionierung der Schneidplatte 3 und damit zu einer genauen Positionierung in allen drei durch die Ebene der Anlagefläche 11 vorgegebenen Bewegungsfreiheitsgraden führt.

An Stelle einer Passschraube 16 nach den Fig. 4 und 5 ist das Positionierelement im Ausführungsbeispiel gemäß Fig. 7 ein Zylinderstift 18 mit einem an dessen freien Ende ausgebildeten Positionierkopf 17. Am Positionierkopf 17 ist ebenso wie im Ausführungsbeispiel nach den Fig. 4 und 5 eine kegelstumpfförmige Verspann- und Positionierfläche 24 ausgebildet. Der Zylinderstift 18 ist dabei ein Passstift, welcher spielfrei in die zylindrische Passbohrung 15 eingesetzt ist und eine genaue Positionierung der Schneidplatte 3 gewährleistet. Der Zylinderstift 18 ist in der Passbohrung 15 gesichert, beispielsweise verklebt, wodurch ein unerwünschtes Herausfallen des Zylinderstifts 18 ausgeschlossen ist.

Fig. 7 zeigt zur besseren Übersicht sowohl eine zylindrische Passbohrung 15 mit einem eingesetzten Zylinderstift 18, als auch eine Passbohrung 15' zur Aufnahme einer Passschraube 16 nach den Fig. 4 und Fig. 5. Es kann zweckmäßig sein, entsprechend der Darstellung nach Fig. 7 in einem Plattensitz 7 beide Passbohrungen 15, 15' anzubringen, um nach Wahl einen Zylinderstift 18 oder eine Passschraube 16 einzusetzen. Alternativ kann es zweckmäßig sein, entweder nur mindestens eine Passbohrung 15 oder nur mindestens eine Passbohrung 15' für jeweils einen Plattensitz 7 vorzusehen, womit dann der Einsatz von Zylinderstiften 18 oder alternativ von Passschrauben 16 festgelegt ist.

Ein weiteres Ausführungsbeispiel ist in Fig. 8 gezeigt, wobei an Stelle der Passschraube 16 (Fig. 4 und 5) oder des Zylinderstiftes 18 (Fig. 7) eine Kegelschraube 25 vorgesehen ist. Die Kegelschraube 25 ist im Übergangsbereich vom Positionierkopf 17 zum Gewindeabschnitt 33 des Schaftes mit einem Kegelsitz 26 versehen, der im montierten Zustand in eine Kegelsenkung 27 der im übrigen als Gewindebohrung ausgeführten Passbohrung 15 eingreift. Beim Festziehen der Kegelschraube 25 führt das Zusammenspiel von Kegelsitz 26 und Kegelsenkung 27 zu einer zentrierenden und spielfreien Verspannung, in deren Folge die Kegelschraube 25 lagegenau ihre vorgesehene Position einnimmt.

Die Passbohrung 15 ist in allen beispielhaften Ausgestaltungen nach den Fig. 4 bis 8 senkrecht zur Anlagefläche 11 in den Plattensitz 7 eingearbeitet. Die senkrecht liegende Passbohrung 15 kann daher sehr genau und während des Fertigungsprozesses leicht überprüfbar eingearbeitet werden, da ein Verlaufen des Werkzeugs aufgrund dessen senkrechter Stellung zum Werkstück ausgeschlossen ist.

Die Positionierausnehmungen 12 in den Ecken 13 einer Schneidplatte 3 sind derart angeordnet, dass die Positionierausnehmungen 12 auf einer bezüglich ihrer Durchgangsbohrung 5 jenseits der entsprechenden Schneidkante 3 liegenden Seite der Schneidplatte 3 angeordnet sind. Die Schneidplatte 3 wird daher in einer Einbaulage verspannt, in welcher die aktive, den Positionierkopf 17 aufnehmende Positionierausnehmung 12 bezüglich der Spannschraube 4 rückwärtig der aktiven Schneidkante 6 liegt, wodurch die Anordnung aus Positionierausnehmung 12 und Positionierkopf 17 geschützt liegt. Die Positionierausnehmungen 12 der Schneidplatte 3 liegen in den Ecken 13 in einem maximal möglichen radialen Abstand zur Durchgangsbohrung 5, so dass die Positionsgenauigkeit der vorgesehenen Drehwinkelstellung der Schneidplatte 3 auf dem Plattensitz 7 optimiert ist.

Die Durchgangsbohrung 5 in der Schneidplatte 3 kann konisch ausgebildet sein, wie in Fig. 7 dargestellt, wobei der in entsprechender Weise als Senkkopf ausgebildete Schraubenkopf der Spannschraube 4 mit einer entsprechend konischen Ausbildung die Schneidplatte 3 auf dem Plattensitz 7 verspannt. Dies unterstützt die spielfrei eingesetzte Passschraube 16 bei ihrer Positionierung, Zentrierung und lagegenauen Verspannung der Schneidplatte 3 in der vorgesehenen Ausrichtung.

Sofern nicht ausdrücklich anders vermerkt, stimmen das Ausführungsbeispiel nach Fig. 7, das Ausführungsbeispiel nach Fig. 8 und das Ausführungsbeispiel nach den Fig. 4, 5 in den übrigen Merkmalen, Eigenschaften und Bezugszeichen überein.

Fig. 6 zeigt eine vergrößerte Detailansicht der erfindungsgemäßen Anordnung nach Fig. 3 im Bereich einer einzelnen Schneidplatte 3 und eines benachbarten Plattensitzes 7 ohne aufgesetzte Schneidplatte. In Ergänzung zur vereinfachten Darstellung nach Fig. 3 ist hier erkennbar, dass neben der Gewindebohrung 8 mindestens eine Passbohrung 15 in die Auflagefläche 9 des Plattensitzes 7 eingebracht ist. Im gezeigten vorteilhaften Ausführungsbeispiel weist der Plattensitz 7 mehrere Passbohrungen 15, 15' auf, in denen unterschiedliche Arten von Passschrauben 16, Zylinderstifte 18 bzw. Kegelschrauben 25 eingesetzt werden können. Durch entsprechende Auswahl einer der mehreren zur Verfügung stehenden Passbohrungen 15, 15' können unterschiedliche Drehrichtungen des Messerkopfs 1 und/oder bestimmte unterschiedliche Achswinkel der Schneidkanten 6 realisiert werden.

Sind in dem Plattensitz 7 mehrere Passbohrungen 15, 15' vorhanden, so werden vorteilhaft diejenigen Passbohrungen 15', welche nicht für die gewählte Art von Schneidplatte 3 vorgesehen und daher nicht mit einem Positionierelement ausgestattet sind, mittels eines Stopfens verschlossen und geschützt.

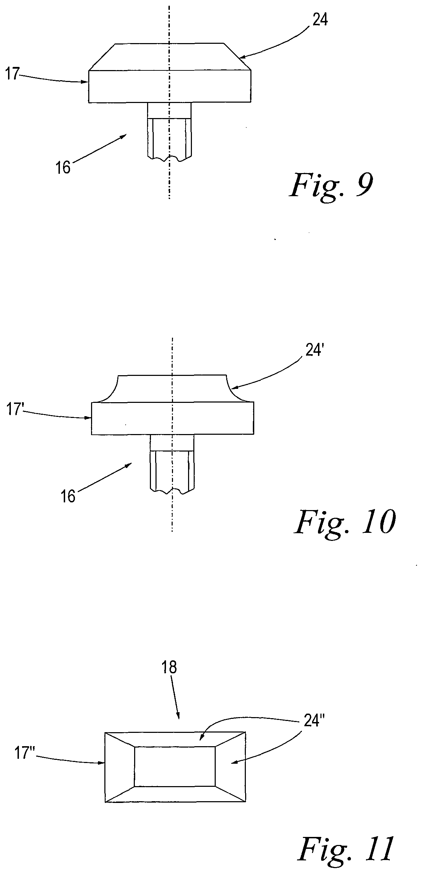

Fig. 9, Fig. 10 und Fig. 11 zeigen verschiedene Ausführungsformen von Positionierköpfen 17, 17', 17" für die oben beschriebenen Positionierelemente. Im Ausführungsbeispiel gemäß Fig. 9 ist der Positionierkopf 17 einer Passschraube 16 mit einer konisch umlaufenden, rotationssymmetrischen Verspann- und Positionierfläche 24 ausgebildet, welche mit einer zumindest abschnittsweise geometrisch ähnlichen Kontur der Passfläche 14 in der Positionierausnehmung 12 einer Schneidplatte 3 (Fig. 4, 5 und 7, 8) zusammenwirkt.

In einer weiteren Ausführungsform gemäß Fig. 10 ist der Positionierkopf 17' einer Passschraube 16 mit einer rotationssymmetrisch, im Querschnitt konkav profilierten Verspann- und Positionierfläche 24' ausgebildet. Es kann auch ein konvex oder mehrfach gekrümmter Profilquerschnitt mit bevorzugt mindestens einem schrägwinklig angeordneten Flächensegment zweckmäßig sein. Die beiden Kopfformen nach den Fig. 9, 10 kommen gleichermaßen auch für Kegelschrauben 25 nach Fig. 8 oder für Zylinderstifte 18 nach Fig. 7 in Betracht.

Wie in Fig. 11 gezeigt ist, kann der Positionierkopf 17" auch mit nicht rotationssymmetrischen Verspann- und Positionierflächen 24" realisiert werden. Im gezeigten Ausführungsbeispiel weist der Positionierkopf 17" eine Kontur mit mehreren angeschrägten, ebenen Teilflächen auf, so dass die analog bzw. geometrisch ähnlich angepasste Schneidplatte 3 bei der Montage auf dem Positionierkopf 17" gleiten kann und mit seiner nicht rechtwinklig zur Anlagefläche 11 der Schneidplatte 3 liegenden Passfläche 14 positioniert werden kann. Das Ausführungsbeispiel nach Fig. 11 kommt insbesondere für Zylinderstifte 18 nach Fig. 7 in Betracht.

Insgesamt gilt für die hier beschriebene Erfindung folgendes unter Bezug auf die Fig. 1 bis 11: Die Passfläche 14 in der Positionierausnehmung 12 der Schneidplatte 3 erreicht stets, auch bei sehr eng angeordneten Schneidplatten 3, eine präzise Positionierung der Schneidplatte 3 in der Ebene der Auflagefläche 9.

Durch die Anordnung und Ausbildung des Positionierelements als separates und längliches Bauteil, nämlich als Passschraube 16, als Zylinderstift 18, als Kegelschraube 25 oder ähnliches, kann dauerhaft eine verschleißfeste und dabei genaue Positionierung von austauschbaren Schneidplatten 3 gewährleistet werden. Lediglich das Positionierelement besteht aus verschleißfestem Material mit einer entsprechenden Härte der Passfläche, während der Werkstoff des Werkzeugträgers eine derartig hohe Verschleißfestigkeit jedenfalls im Hinblick auf die Positionierung der Schneidplatten nicht aufweisen muss. Sollte die Passschraube 16, die Kegelschraube 25 oder der Zylinderstift 18 trotz der geschützten Anordnung und hoher Festigkeit beschädigt oder abgenutzt werden, ist eine Instandsetzung ohne Bearbeitung des Plattensitzes möglich, indem lediglich die Passschraube 16, die Kegelschraube 25 beziehungsweise der Zylinderstift 18 getauscht wird. Die im Vergleich weichere Auflagefläche 9 kann wegen ihrer rein ebenen Ausgestaltung und wegen des Fehlens von am Werkzeugträger 2 ausgebildeten Anschlagflächen 10 bei Beschädigung leicht durch Abziehen repariert werden. Mit geringem Aufwand kann dadurch die Genauigkeit der Anordnung des Positionierelements und damit die Präzision des Messerkopfs 1 wiederhergestellt bzw. aufrechterhalten werden. Der Werkzeugträger 2 bzw. der Messerkopf 1 insgesamt wird somit länger im einsatzfähigen Zustand gehalten.

Da der Plattensitz 7 nach der Erfindung lediglich mit einer im Wesentlichen ebenen Auflagefläche 9 gefertigt werden muss, auf der die Schneidplatte 3 ruht, ist zudem die Abführung von Schneidspänen verbessert. Während bei herkömmlichen Ausbildungen von Plattensitzen mit profilierten Anschlagflächen 10 (Fig. 2) zur Positionierung der Schneidplatten 3' die profilierte Anschlagfläche 10 den Spanraum 34' der benachbarten Schneidenanordnung abdeckt und deshalb oft zu einem Einklemmen von Spänen führt, liegen bei der erfindungsgemäßen Ausführung des Plattensitzes 7 die Spanräume 34 (Fig. 3) völlig frei. Einem Einklemmen von Spänen zwischen den Schneidplatten 3 ist dadurch entgegengewirkt. Eine Abfuhr von Spänen, die zwischen die Schneidplatten geraten, kann nun in die Lücke zwischen den Schneiden einer Schneidenreihe erfolgen. Dem gegenüber kommen die Späne bei der herkömmlichen Anordnung nach Fig. 2 nicht nach hinten gegen den hinteren Plattensitz heraus, während von vorne immer neue Späne in die "Sackgasse" hinein drücken. Diese Behinderungen sind bei der erfindungsgemäßen Anordnung nicht mehr gegeben, was ansonsten zu einer unerwünschten Erwärmung der Werkstückoberfläche und des Werkzeugs führen kann. Zusätzlich kann um den ebenen Plattensitz 7 ein zusätzlicher Spanraum angeordnet werden, welcher beispielsweise bogenförmig oder in unterschiedlichen Drehrichtungen verläuft. Durch entsprechende Gestaltung des Spanraums kann für verschiedene Einbausituationen der erfindungsgemäßen Schneidplatte 3 die Spanabfuhr von der Schneidkante verbessert und optimiert werden.

## Patentansprüche

1. Messerkopf mit einem rotierend antreibbaren Werkzeugträger (2) und mit Schneidplatten (3), wobei die jeweilige Schneidplatte (3) mindestens eine Schneidkante (6), eine Anlagefläche (11) zur Auflage der Schneidplatte (3) auf einem Plattensitz (7) am Werkzeugträger (2) sowie eine Durchgangsbohrung (5) zur Aufnahme einer Spannschraube (4) aufweist, wobei die Schneidplatten (3) jeweils auf Plattensitzen (7) des Werkzeugträgers (2) mittels je einer Spannschraube (4) lösbar befestigt sind, wobei jedem Plattensitz (7) eine Auflagefläche (9) für die Anlagefläche (11) der Schneidplatte (3) sowie ein Positioniermittel zugeordnet ist, wobei die Auflagefläche (9) eben ausgebildet ist,
**dadurch gekennzeichnet, dass** der Plattensitz (7) allein durch die ebene Auflagefläche (9) gebildet ist, wobei das Positioniermittel eine Passbohrung (15) in der Auflagefläche (9) und ein in die Passbohrung (15) eingesetztes und aus der Auflagefläche (9) hervorstehendes Positionierelement umfasst, wobei die jeweilige Schneidplatte (3) mindestens eine Positionierausnehmung (12) aufweist, welche zur Aufnahme des am Plattensitz (7) angeordneten Positionierelementes vorgesehen und mit einer in der Ebene der Anlagefläche (11) positionierend und verspannend wirkenden Passfläche (14) ausgebildet ist, wobei die jeweilige Schneidplatte (3) an jeweils genau einem Positionierelement positioniert und gegen dieses mittels der Spannschraube (4) verspannt ist.

2. Messerkopf nach Anspruch 1,
**dadurch gekennzeichnet, dass** die Passbohrung (15) senkrecht zur Auflagefläche (9) ausgebildet ist.

3. Messerkopf nach Anspruch 1 oder 2,
**dadurch gekennzeichnet, dass** der Plattensitz (7) mehrere Passbohrungen (15) aufweist.

4. Messerkopf nach Anspruch 3,
**dadurch gekennzeichnet, dass** die Passbohrungen (15, 15') eines Plattensitzes (7) unterschiedliche Durchmesser aufweisen und/oder die Paarungen von Positionierelementen und entsprechenden Passflächen (14) der Schneidplatten (3) unterschiedliche Konturen aufweisen.

5. Messerkopf nach einem der Ansprüche 1 bis 4,
**dadurch gekennzeichnet, dass** das Positionierelement einen Positionierkopf (17) mit einer Verspann- und Positionierfläche (24) aufweist, und dass die Verspann- und Positionierfläche (24) in einem Längsschnitt des Positionierelementes gemessen zumindest abschnittsweise schrägwinklig zur Auflagefläche (9), insbesondere geradlinig, konvex oder konkav gekrümmt verläuft.

6. Messerkopf nach Anspruch 5,
**dadurch gekennzeichnet, dass** die Verspann- und Positionierfläche (24) des Positionierelements eine geometrisch ähnliche Kontur wie die Passfläche (14) der Positionierausnehmung (12) aufweist.

7. Messerkopf nach einem der Ansprüche 1 bis 6,
**dadurch gekennzeichnet, dass** die Passbohrung (15) eine Gewindebohrung mit einer zylindrischen Passfläche (31) ist, und dass das Positionierelement eine Passschraube (16) mit einem zylindrischen Passabschnitt (32) ist.

8. Messerkopf nach einem der Ansprüche 1 bis 7,
**dadurch gekennzeichnet, dass** die Passbohrung (15) eine zylindrische Passbohrung ist, und dass das Positionierelement ein Zylinderstift (18) ist.

9. Messerkopf nach einem der Ansprüche 1 bis 8,
**dadurch gekennzeichnet, dass** die Passbohrung (15) eine Gewindebohrung mit einer Kegelsenkung (27) ist, und dass das Positionierelement eine Kegelschraube (25) mit einem Kegelsitz (26) ist.

10. Messerkopf nach einem der Ansprüche 1 bis 9,
**dadurch gekennzeichnet, dass** das Positionierelement aus einem Material gebildet ist, welches härter ist als das Material der Auflagefläche (9).

11. Messerkopf nach einem der Ansprüche 1 bis 10,
**dadurch gekennzeichnet, dass** die Positionierausnehmung (12) im Bereich der Anlagefläche (11) ausgebildet ist.

12. Messerkopf nach Anspruch 11,
**dadurch gekennzeichnet, dass** die Tiefe der Positionierausnehmung (12) in Dickenrichtung der Schneidplatte (3) ausgehend von der Anlagefläche (11) geringer ist als die Dicke der Schneidplatte (3).

13. Messerkopf nach einem der Ansprüche 1 bis 12,
**dadurch gekennzeichnet, dass** die Passfläche (14) durch mindestens zwei winklig zueinander angeordnete Umfangswandabschnitte (29, 30) der Positionierausnehmung (12) gebildet ist.

14. Messerkopf nach einem der Ansprüche 1 bis 13,
**dadurch gekennzeichnet, dass** die Positionierausnehmung (12) auf einer bezüglich der Durchgangsbohrung (5) jenseits der Schneidkante (6) liegenden Seite der Schneidplatte (3) angeordnet ist.

15. Messerkopf nach einem der Ansprüche 1 bis 14,
**dadurch gekennzeichnet, dass** die Passfläche (14) in einem Querschnitt der Schneidplatte (3) gemessen zumindest abschnittsweise schrägwinkelig zur Anlagefläche (11), insbesondere geradlinig, konvex oder konkav gekrümmt verläuft.

16. Messerkopf nach einem der Ansprüche 1 bis 15,
**dadurch gekennzeichnet, dass** die Schneidplatte (3) eine Wendeschneidplatte mit mehreren wahlweise zum Einsatz kommenden Schneidkanten (6) ist, und dass pro Schneidkante (6) je eine Positionierausnehmung (12) vorgesehen ist, welche in Drehwinkelabständen bezüglich der Durchgangsbohrung (5) entsprechend der Drehwinkelabstände der Schneidkanten (3) angeordnet sind.

17. Messerkopf nach einem der Ansprüche 1 bis 16,
**dadurch gekennzeichnet, dass** die Positionierausnehmung (12) im Bereich einer Ecke (13) der Schneidplatte (3) angeordnet ist.

18. Messerkopf nach einem der Ansprüche 1 bis 17,
**dadurch gekennzeichnet, dass** die Tiefe der Positionierausnehmung (12) geringer ist als die Einschraubtiefe einer Spannschraube (4).

## Claims

1. Cutter head having a tool support (2) capable of being driven to rotate and cutting inserts (3), wherein the respective cutting insert (3) has at least one cutting edge (6), a contact surface (11) for supporting the cutting insert (3) on a plate seat (7) at the tool support (2) and a through-hole (5) for the accommodation of a clamping bolt (4), wherein each of the cutting inserts (3) is releasably fastened on an insert seat (7) of the tool support (2) by means of a clamping bolt (4) each, wherein a locating surface (9) for the contact surface (11) of the cutting insert (3) and a positioning means are assigned to each insert seat (7), wherein the locating surface (9) is designed to be flat,
**characterised in that** the insert seat (7) is solely represented by the flat locating surface (9), wherein the positioning means comprises a locating hole (15) in the locating surface (9) and a positioning element installed into the locating hole (15) and projecting from the locating surface (9), wherein the respective cutting insert (3) has at least one positioning recess (12), which is provided for the accommodation of the positioning element located at the insert seat (7) and is designed with a fitting surface (14) acting in a positioning and clamping manner in the plane of the contact surface (11), wherein the respective cutting insert (3) is in each case positioned at precisely one positioning element and clamped against it by means of the clamping bolt (4).

2. Cutter head according to claim 1,
**characterised in that** the locating hole (15) is designed to be perpendicular to the locating surface (9).

3. Cutter head according to claim 1 or 2,
**characterised in that** the insert seat (7) has several locating holes (15).

4. Cutter head according to claim 3,
**characterised in that** the locating holes (15, 15') of an insert seat (7) have different diameters, and/or **in that** the pairings of positioning elements and corresponding fitting surfaces (14) of the cutting inserts (3) have different contours.

5. Cutter head according to any of claims 1 to 4,
**characterised in that** the positioning element has a positioning head (17) with a clamping and positioning surface (24), and **in that** the clamping and positioning surface (24), as measured in a longitudinal section of the positioning element, extends at least in some sections at an angle to the locating surface (9), in particular in a straight line or with a convex or concave curvature.

6. Cutter head according to claim 5,
**characterised in that** the clamping and positioning surface (24) of the positioning element has a contour which is geometrically similar to the fitting surface (14) of the positioning recess (12).

7. Cutter head according to any of claims 1 to 6,
**characterised in that** the locating hole (15) is a threaded hole with a cylindrical fitting surface (31), and **in that** the positioning element has a locating bolt (16) with a cylindrical locating section (32).

8. Cutter head according to any of claims 1 to 7,
**characterised in that** the locating hole (15) is a cylindrical locating hole, and **in that** the positioning element is a cylindrical pin.

9. Cutter head according to any of claims 1 to 8,
**characterised in that** the locating hole (15) is a threaded hole with a countersink (27), and **in that** the positioning element is a conical screw (25) with a conical seat.

10. Cutter head according to any of claims 1 to 9,
**characterised in that** the positioning element is made of a material which is harder than the material of the locating surface (9).

11. Cutter head according to any of claims 1 to 10,
**characterised in that** the positioning recess (12) is formed in the region of the contact surface (11).

12. Cutter head according to claim 11,
**characterised in that** the depth of the positioning recess (12) in the thickness direction of the cutting insert (3), starting from the contact surface (11), is less than the thickness of the cutting insert (3).

13. Cutter head according to any of claims 1 to 12,
**characterised in that** the fitting surface (14) is represented by at least two circumferential wall sections (29, 30) of the positioning recess (12), which are arranged at an angle to each other.

14. Cutter head according to any of claims 1 to 13,
**characterised in that** the positioning recess (12) is located on a side of the cutting insert (3) which is beyond the cutting edge with respect to the through-hole (5).

15. Cutter head according to any of claims 1 to 14,
**characterised in that** the fitting surface (14), as measured in a cross-section of the cutting insert (3), extends at least in some sections at an angle to the contact surface (11), in particular in a straight line or with a convex or concave curvature.

16. Cutter head according to any of claims 1 to 15,
**characterised in that** the cutting insert (3) is an indexable insert with several cutting edges (6) for optional use, and **in that** one positioning recess (12) is provided for each cutting edge (6), the positioning recesses (12) being arranged with a rotational angle spacing with respect to the through-hole (5) which corresponds to the rotational angle spacing of the cutting edges (6).

17. Cutter head according to any of claims 1 to 16,
**characterised in that** the positioning recess (12) is located in the region of a corner (13) of the cutting insert (3).

18. Cutter head according to any of claims 1 to 17,
**characterised in that** the depth of the positioning recesses (12) is less than the tightening depth of a clamping bolt (4).

## Revendications

1. Tête de coupe avec un porte-outil (2) apte à être entraîné en rotation et avec des plaquettes de coupe (3), dans laquelle chaque plaquette de coupe (3) comporte au moins une arête de coupe (6), une surface d'application (11) pour l'appui de la plaquette de coupe (3) sur un siège de plaquette (7) sur le porte-outil (2) ainsi qu'un perçage de passage (5) pour recevoir une vis de serrage (4), dans laquelle chaque plaquette de coupe (3) est fixée de manière amovible sur un siège de plaquette (7) du porte-outil (2) à l'aide d'une vis de serrage (4), dans laquelle une surface d'appui (9) pour la surface d'application (11) de la plaquette de coupe (3) ainsi qu'un moyen de positionnement sont associés à chaque siège de plaquette (7), dans laquelle la surface d'appui (9) a une forme plane,
**caractérisée en ce que** le siège de plaquette (7) est formé seulement par la surface d'appui plane (9), dans laquelle le moyen de positionnement comprend un perçage d'ajustage (15) dans la surface d'appui (9) et un élément de positionnement inséré dans le perçage d'ajustage (15) et dépassant de la surface d'appui (9), dans laquelle chaque plaquette de coupe (3) comporte au moins une cavité de positionnement (12) qui est destinée à recevoir l'élément de positionnement disposé sur le siège de plaquette (7) et est pourvue d'une surface d'ajustage (14) agissant pour un positionnement et un serrage dans le plan de la surface d'application (11), dans laquelle chaque plaquette de coupe (3) est positionnée avec précision sur un élément de positionnement et est serrée contre celui-ci à l'aide de la vis de serrage (4).

2. Tête de coupe selon la revendication 1,
**caractérisée en ce que** le perçage d'ajustage (15) est formé perpendiculairement à la surface d'appui (9).

3. Tête de coupe selon la revendication 1 ou 2,
**caractérisée en ce que** le siège de plaquette (7) présente plusieurs perçages d'ajustage (15).

4. Tête de coupe selon la revendication 3,
**caractérisée en ce que** les perçages d'ajustage (15, 15') d'un siège de plaquette (7) présentent des diamètres différents et/ou les couplages d'éléments de positionnement et de surfaces d'ajustage (14) correspondantes des plaquettes de coupe (3) présentent des contours différents.

5. Tête de coupe selon l'une des revendications 1 à 4,
**caractérisée en ce que** l'élément de positionnement comporte une tête de positionnement (17) avec une surface de serrage et de positionnement (24) et **en ce que** la surface de serrage et de positionnement (24), mesurée dans une coupe longitudinale de l'élément de positionnement, s'étend au moins par sections en étant inclinée par rapport à la surface d'appui (9), en particulier avec une forme rectiligne, courbe convexe ou concave.

6. Tête de coupe selon la revendication 5,
**caractérisée en ce que** la surface de serrage et de positionnement (24) de l'élément de positionnement présente un contour géométriquement similaire à la surface d'ajustage (14) de la cavité de positionnement (12).

7. Tête de coupe selon l'une des revendications 1 à 6,
**caractérisée en ce que** le perçage d'ajustage (15) est un perçage fileté avec une surface d'ajustage cylindrique (31) et **en ce que** l'élément de positionnement est une vis d'ajustage (16) avec une section d'ajustage cylindrique (32).

8. Tête de coupe selon l'une des revendications 1 à 7,
**caractérisée en ce que** le perçage d'ajustage (15) est un perçage d'ajustage cylindrique et **en ce que** l'élément de positionnement est une goupille cylindrique (18).

9. Tête de coupe selon l'une des revendications 1 à 8,
**caractérisée en ce que** le perçage d'ajustage (15) est un perçage fileté avec un logement conique (27) et **en ce que** l'élément de positionnement est une vis conique (25) avec un siège conique (26).

10. Tête de coupe selon l'une des revendications 1 à 9,
**caractérisée en ce que** l'élément de positionnement est formé dans un matériau qui est plus dur que le matériau de la surface d'appui (9).

11. Tête de coupe selon l'une des revendications 1 à 10,
**caractérisée en ce que** la cavité de positionnement (12) est formée dans la zone de la surface d'application (11).

12. Tête de coupe selon la revendication 11,
**caractérisée en ce que** la profondeur de la cavité de positionnement (12) dans le sens de l'épaisseur de la plaquette de coupe (3) à partir de la surface d'application (11) est inférieure à l'épaisseur de la plaquette de coupe (3).

13. Tête de coupe selon l'une des revendications 1 à 12,
**caractérisée en ce que** la surface d'ajustage (14) est formée par au moins deux sections de paroi périphérique (29, 30) de la cavité de positionnement (12) disposées suivant un certain angle l'une par rapport à l'autre.

14. Tête de coupe selon l'une des revendications 1 à 13,
**caractérisée en ce que** la cavité de positionnement (12) est disposée sur un côté de la plaquette de coupe (3) situé au-delà de l'arête de coupe (6) par rapport au perçage de passage (5).

15. Tête de coupe selon l'une des revendications 1 à 14,
**caractérisée en ce que** la surface d'ajustage (14), mesurée dans une coupe transversale de la plaquette de coupe (3), s'étend au moins par sections en étant inclinée par rapport à la surface d'appui (11), en particulier avec une forme rectiligne, courbe convexe ou concave.

16. Tête de coupe selon l'une des revendications 1 à 15,
**caractérisée en ce que** la plaquette de coupe (3) est une plaquette de coupe réversible avec plusieurs arêtes de coupe (6) entrant en action sélectivement, et **en ce qu'**il est prévu pour chaque arête de coupe (6) une cavité de positionnement (12) qui est disposée par rapport au perçage de passage (5) suivant un écartement angulaire correspondant à l'écartement angulaire des arêtes de coupe (3).

17. Tête de coupe selon l'une des revendications 1 à 16,
**caractérisée en ce que** la cavité de positionnement (12) est disposée dans la zone d'un coin (13) de la plaquette de coupe (3).

18. Tête de coupe selon l'une des revendications 1 à 17,
**caractérisée en ce que** la profondeur de la cavité de positionnement (12) est inférieure à la profondeur de vissage d'une vis de serrage (4).
